# EUROPÄISCHE PATENTANMELDUNG

(11) **EP 1 998 489 A1**
(43) Veröffentlichungstag der Anmeldung: **03.12.2008**
(21) Anmeldenummer: 07010550.7
(22) Anmeldetag: 26.05.2007
(51) Int. Cl.: H04L 9/06

(54) **AES Verschlüsselung mit erhöhter Sicherheit**

(71) Anmelder: DSI Informationstechnik GmbH, 28199 Bremen (DE)
(72) Erfinder: Hinsenkamp, Laszlo, 28199 Bremen (DE); Michalik, Harald, 38640 Goslar (DE)

(57) **Zusammenfassung**

Neu an der vorgeschlagenen Lösung ist, dass eine veränderte AES-Verschlüsselung durch die Anwendung anderer irrreduzibler Polynome für die S-Boxes erzielt wird wird.

## Beschreibung

Es ist bekannt, dass das National Institute of Standards and Technology (NIST), nach einem weltweiten Wettbewerb um 2001 ein symmetrisches Verschlüsselungsverfahren mit dem Namen Advanced Encryption Standard (AES) als Norm (FIPS-197) ausgewählt hat. AES wurde für weltweite Anwendungen auf den Gebieten Bankensektor, Industrie, Ökonomie usw. gedacht. Die Struktur des AES ist bekannt und in der Literatur ausführlich analysiert. AES erfüllt vielseitige Anforderungen und ist auf unterschiedlichen technischen Plattformen effektiv realisierbar. AES leistet eine ansehbare Sicherheit. Es sind zahlreiche Formen der AES Realisierung veröffentlicht worden.

Die allgemeine Form der AES birgt bestimmte kryptographische Gefahren. Für eine Variante der AES für spezielle Zwecke ist es vorteilhaft, das AES möglichst wenig zu verändern.

Es ist auch bekannt, dass für die irrreduziblen Polynome der S-Boxen des AES einfach das lexikografisch erstmögliche Polynom gewählt geworden ist. Die bekannten nichtlinearen Eigenschaften der AES S-Boxes werden nicht verändert, wenn für das Polynom ein anderes irrreduzibles Polynom benutzt wird. Mit der Verwendung eines anderen Polynoms wird jedoch dieser veränderte AES von dem weltweit bekannten AES abgegrenzt. Diese Abgrenzung kann man dadurch verstärken, dass bekannte Anwendungsvarianten eingesetzt werden. Eine dieser Anwendungsvarianten ist die für DES entwickelte dreifache Verschlüsselung ("Triple"), mit der die Schlüssellänge vergrößert und die Sicherheit erhöht wird. Es existieren zahlreiche Varianten der sogenannten "Triple"-Strukturen.

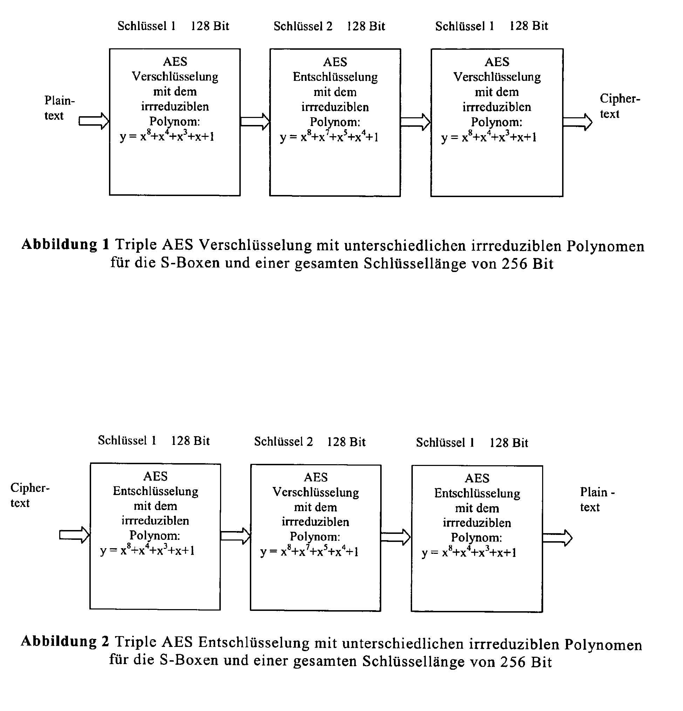

Eine interessante Kombination der Anwendung der veränderten S-Boxes und der Triple Verschlüsselung zeigt die Abbildung 1. In Abbildung 2 ist die entsprechende Entschlüsselung dargestellt. Der angewandte Operationsmode der AES ist dabei irrelevant.

## Patentansprüche

1. Veränderte AES Verschlüsselung, die **dadurch gekennzeichnet ist, dass** das genormte Verfahren nach FIPS-197 durch die Anwendung anderer irrreduzibler Polynome für die S-Boxes verändert wird.
